(19) Europäisches Patentamt
European Patent Office
Office européen des brevets

(11) EP 0 828 062 A2

(12) **EUROPEAN PATENT APPLICATION**

(43) Date of publication:
**11.03.1998 Bulletin 1998/11**

(51) Int. Cl.$^6$: **F01M 11/10**, F16N 29/00

(21) Application number: **97115468.7**

(22) Date of filing: **05.09.1997**

(84) Designated Contracting States:
**AT BE CH DE DK ES FI FR GB GR IE IT LI LU MC NL PT SE**
Designated Extension States:
**AL LT LV RO SI**

(30) Priority: **06.09.1996 JP 236539/96**

(71) Applicant:
**YAMAHA HATSUDOKI KABUSHIKI KAISHA**
**Iwata-shi Shizuoka-ken, 438 (JP)**

(72) Inventor:
**Anamoto, Takayuki,**
**c/o Yamaha Hatsudoki K.K.**
**Iwata-shi, Shizuoka-ken, 48 (JP)**

(74) Representative:
**Grünecker, Kinkeldey,**
**Stockmair & Schwanhäusser**
**Anwaltssozietät**
**Maximilianstrasse 58**
**80538 München (DE)**

(54) **Lubricating-oil supply system for two-cycle engines**

(57) A lubricating-oil supply system for a two-stroke cycle engine, comprises an oil pump supplying lubricating oil from an oil tank to various areas of said engine, said lubricating-oil supply system is provided with an anomaly detection means to detect anomalies in operation of said oil pump.

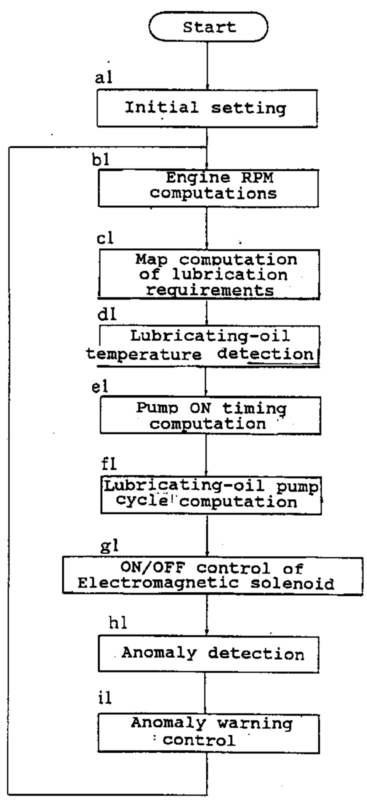


*FIG. 4*

EP 0 828 062 A2

## Description

The present invention relates to a lubricating-oil supply apparatus for two-cycle engine, comprising an oil pump supplying lubricating-oil from an oil tank to various areas of said engine.

In the past, lubricating-oil supply apparatus for two-cycle engines have employed mechanical oil pumps that are operated, for example, by a power output from the engine's crankshaft.

Such mechanical oil pumps provide lubricating oil to prevent the seizing of the engine when it is operated at high RPM, and as such, they are set to deliver the amount of lubricating oil that is required for operations in the high RPM range. His means that a surplus of lubricating oil is supplied to the engine when it is operating in the low RPM range, decreasing the performance of the engine, increasing white smoke in the post-combustion exhaust gases, causing lubricating oil to drip from the exhaust pipe, and further, increasing the consumption of lubricating oil.

Electrically driven oil pumps which are driven by electromagnetic solenoids have been considered as substitutes for mechanically driven oil pumps. While it would be possible to provide lubricating-oil supplies throughout the entire operating range of the engine based upon its operational state by using the electronic ON/OFF control of an electromagnetic solenoid driven oil pump, the way such an apparatus would respond after an anomaly was detected is an issue that especially involves the detection of anomalies in an electronics-controlled drive system.

It is an objective of the present invention to provide an improved lubricating oil supply system as indicated above, which with simple technical means facilitates the avoidance of malfunctions in the supply of lubricating oil.

According to the present invention this objective is solved for lubricating oil supply system as indicated above by an anomaly detection means to detect anomalies in operation of said oil pump.

According to an advantageous embodiment of the present invention said oil pump is electrically drivable by an electromagnetic solenoid controllable by a control unit.

In order to enhance the detection of anomalies it is advantageous when a drive state detection means is provided for detecting the drive state of the electromagnetic solenoid, said anomaly detection means detects anomalies by comparing the ON/OFF output timing for driving the electromagnetic solenoid with the drive state detection timing for said electromagnetic solenoid.

In that case it is either possible that the drive state detection means is a drive state detection sensor that detects the magnetic field generated when the electromagnetic solenoid is turned ON, and wherein the anomaly detection means detects anomalies by comparing the ON/OFF output timing that drives the electromagnetic solenoid with the electromagnetic field detection timing, or that the drive state detection means is a drive state detection sensor that detects the operation of a plunger of the electromagnetic solenoid, and wherein the anomaly detection means detects anomalies by comparing the ON/OFF output timing that drives the electromagnetic solenoid with the operation detection timing.

In case an operator should react on an anomaly it is advantageous when said lubrication oil supply system comprising an anomaly warning means for indicating an anomaly detected.

According to another embodiment of the present invention there is provided a lubricating-oil supply system for two-cycle engines which employ an oil pump that supplies lubricating oil from inside the oil tank to various areas of the engine, wherein the lubricating-oil supply apparatus for two-cycle engines are characterized by being equipped with an ON/OFF electrically driven electromagnetic solenoid to drive the foregoing oil pump, a drive state detection means that detects the drive state of the electromagnetic solenoid, and an anomaly detection means that detects anomalies by comparing the ON/OFF output timing for driving the foregoing electromagnetic solenoid with the drive state detection timing for the foregoing electromagnetic solenoid. By using an electrically driven oil pump, it is possible to provide precise amounts of lubricating oil to the engine to match its oil requirements. Further, by comparing the ON/OFF drive output timing for the electromagnetic solenoid with the drive state detection timing for the electromagnetic solenoid, it is possible to reliably detect any anomalies in the drive system using electronic controls.

Further, it is possible that the foregoing drive state detection means being a detection sensor that detects the magnetic field generated when the foregoing electromagnetic solenoid is turned ON, and by the foregoing anomaly detection means detecting anomalies by comparing the ON/OFF output timing that drives the foregoing electromagnetic solenoid with the foregoing electromagnetic field detection timing. It is possible to detect broken wires in the electromagnetic solenoid by detecting the electromagnetic field generated when current is applied to the electromagnetic solenoid.

Moreover, it is advantageous when the foregoing drive state detection means being a detection sensor that detects the operation of the plunger of the foregoing electromagnetic solenoid, and by the foregoing anomaly detection means detecting anomalies by comparing the ON/OFF output timing that drives the foregoing electromagnetic solenoid with the foregoing operation detection timing. It is possible to detect anomalies in the drive system by detecting the movement of the plunger of the electromagnetic solenoid.

In addition, the lubricating-oil supply apparatus may be equipped with an anomaly warning means that provides warning of an anomaly based on the foregoing anomaly detection. The detection of an anomaly triggers an anomaly warning. This warning may be, for example, the blinking of a warning light that notifies the user, or the transmission of the anomaly to an ignition control unit that controls the ignition to prevent the engine RPM from rising beyond a certain level, etc.

Other preferred embodiments of the present invention are laid down in further dependent claims.

In the following, the present invention is explained in greater detail subject to several embodiments thereof in conjunction with the accompanying drawings, wherein:

**Figure 1** is a control block diagram of a two-cycle engine.
**Figure 2** shows a sectional view of a lubricating-oil supply apparatus.
**Figure 3** shows another embodiment of a lubricating-oil supply apparatus.
**Figure 4** is a flow chart of the main process for the lubricating-oil supply apparatus.
**Figure 5** is a flow chart of the computation of the ON/OFF pump cycles for the electromagnetic solenoid.
**Figure 6** is a graph showing the relationship between the ON time of the ON/OFF control and the pump cycles.
**Figure 7** is a flow chart of the ON/OFF control of an electromagnetic solenoid.
**Figure 8** Is an anomaly detection flow chart for detecting broken wires in the solenoid.
**Figure 9** Is an anomaly detection flow chart for detecting abnormal plunger operations.
**Figure 10** Is a timing chart for anomaly detection.
**Figure 11** is a flow chart of the anomaly warning control.

Embodiments of lubricating-oil supply apparatus for two-cycle engines according to this invention will be explained below with reference to the figures.

Figure 1 is a block diagram of the control for a two-cycle engine. The two-cycle engine 1 is equipped with a flywheel magnet 2. The electrical generation by this flywheel magnet 2 serves as drive power source for a CDI unit 3 (Capacitive Discharge Ignition), and as a drive power source, through the regulator 4, for the lubricating-oil supply apparatus 10. The battery 6 is also charged through the regulator 4. The flywheel magnet 2 is equipped with a pulse coil 7. The pulse signals from the pulse coil 7 are used by the CDI unit 3 to emit the engine RPM signal. The ignition coil 8 provides spark to the spark plugs 9 based upon the engine RPM signal.

The lubricating-oil supply apparatus 10 comprises a unitized a control unit 11, electromagnetic solenoid 12 and oil pump 13; the driving of the oil pump 13 supplies lubricating oil from the oil tank 14 to a number of areas 15 of the engine. Electrical power to the electromagnetic solenoid 12 provides the drive for the oil pump 13.

The control unit 11 is equipped with a power circuit 16, an RPM signal detection circuit 17, a temperature detection sensor 18, CPU 19, and an output circuit 20. The power circuit 16 applies the drive power to the control unit 11. The RPM detection circuit 17, detects the engine's RPM from the CDI unit 3 and sends it to the CPU 19. At the CPU 19, the pulse cycles are measured to detect the engine's RPM. The CPU 19 also computes the lubricating-oil requirement based upon the engine RPM. This lubricating-oil requirement can be determined by experimentation, etc., for various engine RPM ranges, and then that requirement can be read from a two-dimensional map of the engine RPM and lubricating-oil requirements. For example, the lubricating-oil requirement (m1) can be computed for each revolution for the engine RPM levels, for example, for 1500, 3000, 4000, 5000, 6000, 10000....

The ON time for the electromagnetic solenoid 12 can also be set by the CPU 19 based upon such factors as the type of lubricating oil, temperature, etc. For example, after detecting the temperature of the lubricating oil, the ON time can be set using a two-dimensional map based on temperature. The ON time (ms) can thus be determined from the temperature (°C) of the lubricating oil, for example, for temperatures of -40, -20, 0, 20, 40, 60....

The lubricating-oil supply apparatus 10 is equipped with a drive state detection means 100 that detects the drive state of the electromagnetic solenoid 12 and with an anomaly detection means 101 that detects anomalies by comparing the ON/OFF output timing that drives the electromagnetic solenoid 12 with the drive state detection timing of the electromagnetic solenoid 12. The electromagnetic solenoid 12 is used for the electrical drive of the oil pump 13; it makes it possible to supply precise quantities of lubricating oil that match the engine's requirements. Furthermore, comparing the ON/OFF output timing that drives the electromagnetic solenoid 12 with the drive state detection timing of the electromagnetic solenoid 12 makes it possible to use electronic controls to reliably detect any anomalies in that drive system.

Further, the lubricating-oil supply apparatus 10 is equipped with an anomaly warning means that provides warning of anomalies when they are detected. Such warning may be, for example, notification of the user by means of a blinking light, or the transmission of that warning to an ignition control unit which controls the ignition to prevent the engine RPM from rising above a certain level, thereby preventing the seizing of the engine.

The structure of the lubricating-oil supply apparatus 10 is shown in Figure 2. Figure 2 is a sectional view of the lubricating-oil supply apparatus. The case 30 of the lubricating-oil supply apparatus 10 contains a unitized control unit 11, electromagnetic solenoid 12, and oil pump 13. The baseplate 31 of the control unit 11 is supported between the housing 32 and the dividing wall member 33. A thermistor is a temperature detection sensor 18. The baseplate 31 connects with a waterproof coupler 34, which makes connections with a battery 6, regulator 4, and CDI unit 3.

The plunger is movably supported on the support member 35 for the electromagnetic solenoid 12. One end of the plunger 36 is connected to the pump rod 37 of the oil pump 13, while the other end is attached to the motive member 38. The pump rod 37 is movably mounted in the pump unit 39, and the force of a spring 40 biases a lubricating-oil passage in the open direction and keeps the motive member 38 in contact with the dividing wall member 33. With the motive member 38 in contact with the dividing wall member 33, there is a distance D between the motive member 38 and the support member 35; that distance defines the operational excursion of the plunger 36.

A coil 41 encompasses the support member 35 of the electromagnetic solenoid 12 and the motive member 38. This coil 41 is connected by a wire 42 to the baseplate 31. When current is applied to the coil 41, the plunger 36 moves from the position shown in Figure 2 toward the closed direction **a** of the of the lubricating-oil passage, and the motive member 38 moves to come in contact with the support member 35. Then, when the current to the coil 41 is cut, the spring 40 causes the plunger 36 to move toward the open direction **b** of the lubricating-oil passage, thereby returning to the position shown in Figure 2. Repetition of this action causes pumping the lubricating oil.

A housing 60, 61 is fitted onto both sides of the pump unit 29 of the oil pump 13. There are a lubricating-oil passage 39a, an intake passage 39b and a pump outlet passage 39c formed in the pump unit 39. The intake passage 39b is connected with the pump outlet passage 39c by a connecting passage 39d. The lubricating passage 39a and the intake passage 39b are connected through a filter 62 with the tank-side passage 60a of the housing 60; the pump outlet passage 39c is connected to the engine-side passage 60b of the housing. The lubricating-oil passage 39a conducts the lubricating oil toward the spring side to provide lubrication to the sliding areas of the spring 40 and the pump rod 37. The intake passage 39b is opened and closed by a ball valve 63, and the connecting passage 39d is also opened and closed by a ball valve 64. The ball valve 63 is biased in the closed direction **c** by a spring 65 disposed between it and the pump rod 37.

Application of current to the coil 41 causes the pump rod 37 to move in the closing direction **a**, whereupon the ball valve 63 closes the intake passage 39b. The compressed lubricating oil then overcomes the resistance of the spring 66 in the connecting passage 39d to cause it to move in the opening direction **f** and to allow lubricating oil to flow from the connecting passage 39d into the pump passage 39c, and then be pumped from the engine-side passage 60b of the housing 60 to various areas 15 of the engine.

A spring 66 disposed between the ball valve 64 and a stop 67 biases the connecting passage 39d in the normally closed direction **e** to automatically close off the flow of the compressed lubricating oil flowing in the pump passage 39c.

When the current to the coil 41 is cut, the spring 40 causes the pump rod 37 to move in the opening direction **b**, which causes the ball valve 36 to move in the opening direction **d** for the intake passage 39b, thereby opening that intake passage 39b to the intake of lubricating oil.

When current is again applied to the coil 41, the pump rod 37 moves in the closing direction **a** and then the same operation is repeated to cause the lubricating oil to be supplied to various areas 15 of the engine.

Thus, the oil pump 13 is electrically driven based on the engine's operating state through the electronic ON/OFF control of the electromagnetic solenoid 12. This allows the high precision supply of lubricating oil to the engine according to its requirements.

Further, the control unit 11 determines the engine's RPM, computes the amount of lubricating oil required based upon the engine RPM, and controls the electromagnetic solenoid 12 by computing a pumping frequency for the solenoid.

The ON time for the electromagnetic solenoid 12 can be set according to the lubricating-oil conditions, such as the type of lubricating oil, the temperature and other oil conditions. This feature makes it possible to supply highly accurate amounts of lubricating oil to various areas 15 of the engine.

The ON time for the electromagnetic solenoid 12 can be computed from a two-dimensional map based on the temperature of the lubricating oil. Since the viscosity of the lubricating oil increases with lower temperatures, if the ON time were to remain constant, it would not be possible to pump the required amounts of lubricating oil when the oil viscosity was higher due to lower temperatures; the resulting reduced output of lubricating oil could cause the engine to seize. However, by varying the ON time according to the temperature of the lubricating oil, it becomes possible to reliably prevent engine seizing.

Further, due to the unitization of the control unit 11, the electromagnetic solenoid 12 and the oil pump 13 of the lubricating-oil supply apparatus 10, there is a correlation between the temperature upon the baseplate 31 and the oil temperature. As a result, the temperature detection sensor 18 may be mounted on the baseplate 31 to avoid the need for wire routing, which provides a cost advantage.

Further, as is shown in Figure 1, it is further possible to locate the temperature detection sensor 18 that detects the temperature of the lubricating oil upon the oil pump 13; the positioning of the temperature detection sensor 18 on the oil pump 13 is easy and allows short wiring lengths.

The drive state detection means 100 for the lubricating-oil supply apparatus 10 is a detection sensor 120 that detects the magnetic field generated when the electromagnetic solenoid 12 is turned ON. This detection sensor 120 can employ a Hall IC or the like as a magnetic sensor. The detection sensor 120 is mounted opposite the electro-magnetic solenoid 12 on the baseplate 31; it detects the magnetic field generated when the electromagnetic solenoid 12 is turned ON and then sends a signal to the CPU 19. The anomaly detection means 101 of the CPU 19 detects anomalies by comparing the ON/OFF output timing that drives the electromagnetic solenoid 12 with the drive state detection timing of the electromagnetic solenoid 12. The detection of the magnetic field when current is applied to the electromagnetic solenoid 12 makes it possible to detect broken wires in the electromagnetic solenoid 12.

Figure 3 shows another embodiment of the lubricating-oil supply apparatus. In this embodiment, the drive state detection means of the lubricating-oil supply apparatus 10 is a detection sensor 130 that detects the operation of the plunger 36 of the electromagnetic solenoid 12. A magnetic sensor such as a Hall IC may be used as this detection sensor 130. This detection sensor 130 may be mounted on the baseplate 31 in a position opposite a magnetic member 131 that is mounted on the end of the plunger 36. It then detects the generated magnetic field that accompanies the operation of the plunger 36 and sends that information to the CPU 19. The position of the detection sensor 130 is such that it lies a certain distance W from the electromagnetic solenoid 12; the preservation of this distance W prevents any effects from the magnetic field generated by the electromagnetic solenoid 12 from interfering with the detection sensor 130. Further, a magnetic shield can be used for the dividing wall member 33, which further assures that the detection sensor 130 remains unaffected by the magnetic field from the electromagnetic solenoid 12.

The anomaly detection means 101 of the CPU 19 detects anomalies by comparing the ON/OFF timing that drives the electromagnetic solenoid 12 with the operation detection timing; this makes it possible to detect anomalies in the drive system by detecting the movement of the plunger 36 of the electromagnetic solenoid 12.

Figure 4 is a main process flow chart for the lubricating-oil supply apparatus. First the initial settings are performed (step a1), and then the engine RPM is computed on the basis of engine RPM signal from the CDI unit (step b1). Next, the lubricating-oil requirement is computed based on a two-dimensional map with the engine RPM (step c1), and the lubricating-oil temperature is detected by the temperature detection sensor 18 (step d1). The ON time for the electromagnetic solenoid 12 is then set based upon the detection of the lubricating-oil temperature using a two-dimensional map with the oil temperature (step e1). Conversion is then made for the ON/OFF pump cycles for the electromagnetic solenoid 12 (step f1). Drive control is then exercised over the turning ON and OFF of the electromagnetic solenoid 12 (step g1).

Amid this ON/OFF drive of the electromagnetic solenoid 12, detection of any anomalies in the drive system is performed by electronic control which compares the ON/OFF output timing that drives the electromagnetic solenoid 12 with the drive state detection timing for the electromagnetic solenoid 12 (step h1). If an anomaly is detected, control is exercised to provide an anomaly warning (step i1) via an anomaly warning means 102.

Figure 5 is a flow chart for the ON/OFF pump cycle computation for the electromagnetic solenoid. The pumping volume from one cycle of operation by the plunger 36 is mechanically determined. Thus the pump cycles needed to provide the required amounts of lubricating oil to the various parts of the engine based upon the engine RPM may be computed by the following equation:

$$\text{Pump cycles} = (\text{pump volume per cycle/engine oil requirement per revolution}) \times (60/\text{engine RPM}) \text{ (sec.)}$$

The pump cycles and the ON time can be used to drive a timer that performs the ON/OFF control of the electromagnetic solenoid 12.

Figure 6 shows the relationship between the ON time of this ON/OFF control and the pump cycles. As is shown in Figure 6, when the engine is operating at a certain RPM, the number $n$ of RPM that the engine turns per each pump cycle output is:

$$n = \text{single cycle pump output/oil requirement per engine revolution.}$$

Then, the time required for 1 revolution of the engine is 60 ÷ engine RPM, so multiplication by $n$ yields the pump cycle time (seconds).

Figure 7 is a flow chart showing the ON/OFF control of the electromagnetic solenoid. A determination is made of whether or not the electromagnetic solenoid is currently ON (step a2) and if it is ON, a determination is made of whether or not the ON time setting has elapsed (step b2). If the ON time has not elapsed, the program flow returns, if the ON time has elapsed, the electromagnetic solenoid 12 is turned OFF and there is a return (step c2).

If at step a2 the electromagnetic solenoid 12 is currently OFF, a computation is made of the OFF time by subtracting the ON time from the pump cycle (step d2) and then a determination is made as to whether the OFF time as elapsed (step e2). If the OFF time has not elapsed, the program returns, if it has elapsed, the timer that performs the ON/OFF control is released (step f2) and then the electromagnetic solenoid 12 returns to ON (step g2).

Next, the detection of anomalies will be explained with reference to Figures 8 through 11. Figure 8 is a flow chart of anomaly detection for the case when a solenoid wire breakage is detected. Figure 9 is a flow chart of anomaly detection when there is a plunger operation anomaly. Figure 10 is a timing chart of the detection of an anomaly. Figure 11 is a flow chart of anomaly warning control

In Figure 8, when there is a solenoid wire break detection, a determination is made as to whether or not the output from the CPU 19 is currently ON (step a3); if it is ON, the anomaly determination timer is set, the anomaly determinating interval flag is set to 1, and the electromagnetic solenoid state determination flag is cleared to 0 (step b3). Then, a determination is made of whether or not the anomaly determination interval is in effect (step c3); when OFF in step a3, the program moves to step c3, having determined that the anomaly determination interval is not in effect.

When not within the anomaly determination interval, the anomaly determination timer is cleared and there is a return (to step d3). When within the anomaly determination interval, a determination is made of whether or not the anomaly determination interval has elapsed (step e3), and if that interval has not elapsed, a determination is made as to whether or not the current to the electromagnetic solenoid 12 is ON (step f3).

If the electromagnetic solenoid 12 is ON, the electromagnetic solenoid state determination flag is set to 1 and the program returns (step g3). If the electromagnetic solenoid 12 is OFF, a determination is made as to whether or not the electromagnetic solenoid state determination flag is 1 (step h3), if the determination flag is not 1, the program returns, if the determination flag is 1, the electromagnetic solenoid state determination flag is set to 2 and the program returns (step i3).

If the anomaly determination interval has elapsed in step e3, the anomaly determination interval flag is cleared to 0 (step j3), a determination is made of whether or not the electromagnetic solenoid state determination flag is 2 (step k3); if the determination flag is 2, the electromagnetic solenoid is normal, the anomaly flag is cleared to 0, and the program returns (step l3). In step k3, if the electromagnetic solenoid state determination flag is not 2, the electromagnetic solenoid is abnormal, the anomaly flag is set to 1, and the program returns (step m3).

In Figure 9, when a plunger operational anomaly is detected, a determination is made as to whether or not the output from the CPU 19 is currently ON (step a4), if ON, the anomaly determination timer is set, the anomaly determination interval flag is set to 1, and the plunger state determination flag is cleared to 0 (step b4). A determination is then made as to whether or not the anomaly determination interval has elapsed (step c4); if OFF in step a4, the program proceeds to step c4 and determines whether or not the anomaly determination interval is in effect.

If not in the anomaly determination interval, the anomaly determination timer is cleared and the program returns (step d4). If within the anomaly determination interval, a determination is made as to whether or not the anomaly determination interval has elapsed (step e4), if it has not elapsed, a determination is made as to whether or not the plunger position is ON (step f4).

If the plunger position is ON, the plunger state determination flag is set to 1 and the program returns (step g4). If the plunger position is OFF, a determination is made as to whether or not the plunger state determination flag is 1 (step h4), if the determination flag is not 1, the program returns; if the determination is 1, the plunger state determination flag is set to 2 and the program returns (step i4).

If in step e4 the anomaly determination interval has elapsed, the anomaly determination interval flag is cleared to 0 (step j4) and a determination is made of whether or not the plunger state determination flag is 2 (step k4). If the determination flag is 2, the plunger 36 is normal, the anomaly flag is cleared to 0, and the program returns (step l4). If in step k4 a determination is made that the plunger state determination flag is not 2, then the plunger 36 operated abnormally, the anomaly flag is set to 1, and the program returns (step m4).

In Figure 11, when an anomaly is detected, a determination is made as to whether the electromagnetic solenoid 12 is abnormal by checking whether the anomaly flag is 1 (step a5), if not abnormal, the program returns. If it is abnormal, control is exercised to blink the warning lamp (step b5), an engine ignition cutoff control signal is emitted, and the program returns (step c5). If there is an anomaly, it is also possible to exercise either control to cause the warning lamp to blink in step b5, or to cause a control signal to cut the ignition as in step c5.

As has been explained above, the invention employs an electrically driven oil pump which makes it possible to accurately supply the amounts of lubricating oil required by the engine. Further, by comparing the ON/OFF output timing that drives the electromagnetic solenoid with the timing of the electromagnetic solenoid drive state detector, it is further possible to reliably detect anomalies in the drive system using electronic controls.

Further, by comparing the ON/OFF output timing for driving the electromagnetic solenoid with the timing of the electromagnetic field detection, the system detects when current is applied to the electromagnetic solenoid, thereby making it possible to detect broken wires in the electromagentic solenoid.

Moreover, by comparing the ON/OFF output timing for driving the electromagnetic solenoid with the timing of the operation detector to detect the movement of the plunger of the electromagnetic solenoid, the apparatus makes it possible to detect anomalies of the drive system.

In addition the apparatus performs anomaly warnings upon detection of an anomaly. Such anomaly warning may consist, for example of a notification to the user of the anomaly by causing a warning lamp to flash, or it can transmit the anomaly warning to control the ignition system, or cut the ignition at times when the engine RPM exceeds a certain level in order to prevent engine seizing.

## Claims

1. Lubricating-oil supply system (10) for a two-stroke cycle engine (1), comprising an oil pump (13) supplying lubricating oil from an oil tank (14) to various areas (15) of said engine (1), **characterized by** an anomaly detection means (101) to detect anomalies in operation of said oil pump (13).

2. Lubrication-oil supply system (10) according to claim 1, **characterized in that** said oil pump (13) is electrically drivable by an electromagnetic solenoid (12) controllable by a control unit (11).

3. Lubrication-oil supply system (10) according to claim 2, **characterized by** a drive state detection means (100) for detecting the drive state of the electromagnetic solenoid (12), said anomaly detection means (101) detects anomalies by comparing the ON/OFF output timing for driving the electromagnetic solenoid (12) with the drive state detection timing for said electromagnetic solenoid (12).

4. Lubrication-oil supply system (10) according to claim 3, **characterized in that** the drive state detection means (100) is a drive state detection sensor (120) that detects the magnetic field generated when the electromagnetic solenoid (12) is turned ON, and wherein the anomaly detection means (101) detects anomalies by comparing the ON/OFF output timing that drives the electromagnetic solenoid (12) with the electromagnetic field detection timing.

5. Lubrication-oil supply system (10) according to claim 3, **characterized in that** the drive state detection means (100) is a drive state detection sensor (130) that detects the operation of a plunger (36) of the electromagnetic solenoid (12), and wherein the anomaly detection means (101) detects anomalies by comparing the ON/OFF output timing that drives the electromagnetic solenoid (12) with the operation detection timing.

6. Lubrication-oil supply system (10) according to at least one of the preceding claims 1 to 5, **characterized by** anomaly warning means (102) for indicating an anomaly detected.

7. Lubrication-oil supply system (10) according to at least one of the preceding claims 1 to 6, **characterized in that** said anomalies are solenoid wire breakage, plunger operation anomaly or the like.

8. Lubrication-oil supply system (10) according to at least one of the preceding claims 2 to 7, **characterized in that** said control unit (11) comprising a power circuit (16), a RPM-signal detection circuit (17), a temperature detection sensor (18), a CPU (19) and an output circuit (20).

9. Lubrication-oil supply system (10) according to claim 8, **characterized in that** said CPU (19) being adapted to control the lubricating-oil requirement based upon the engine RPM which is compared with a two-dimensional map containing for various engine RPM the respective lubricating requirement.

10. Lubrication-oil supply system (10) according to claim 8 or 9, **characterized in that** said control unit (11) being adapted to control the electromagnetic solenoid (12) by computing a pumping frequency of said electromagnetic solenoid (12).

11. Lubrication-oil supply system (10) according to at least one of the preceding claims 2 to 10, **characterized in that** the ON time for said electromagnetic solenoid (12) is computable from a two-dimensional map based on the temperature of said lubricating-oil.

12. Lubricating-oil supply system (10) according to claim 11, **characterized in that** a temperature detection sensor (18) for detecting the temperature of said lubricating-oil is either mounted on a base plate (31) of the control unit (11) or on the oil pump (13).

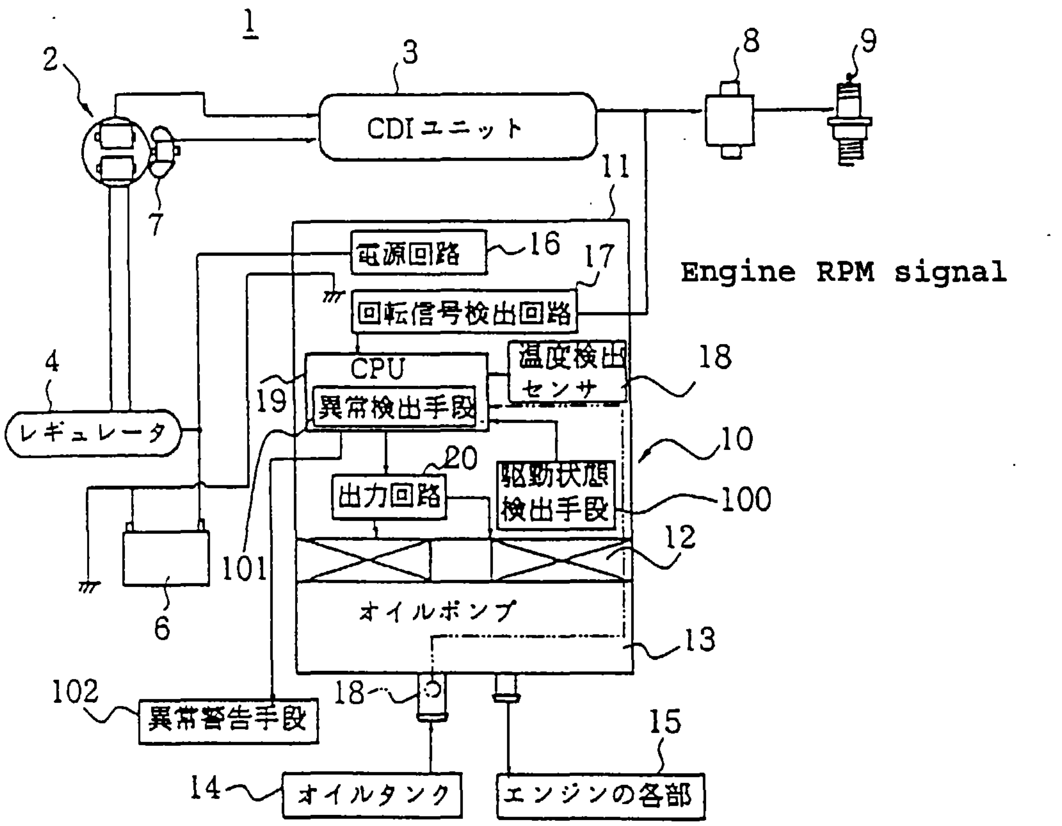


*FIG. 1*

| | |
|---|---|
| 3 | CDI Unit (Capacitive Discharge Ignition) |
| 4 | Regulator |
| 13 | Oil pump |
| 14 | Oil tank |
| 15 | Various areas of the engine |
| 16 | Power supply circuit |
| 17 | RPM signal detection circuit |
| (upper) 18 | Temperature detection sensor |
| (lower) 18 | Oil pump |
| 20 | Output Cirucit |
| 100 | Drive state detection means |
| 101 | Anomaly detection means |
| 102 | Anomaly warning means |

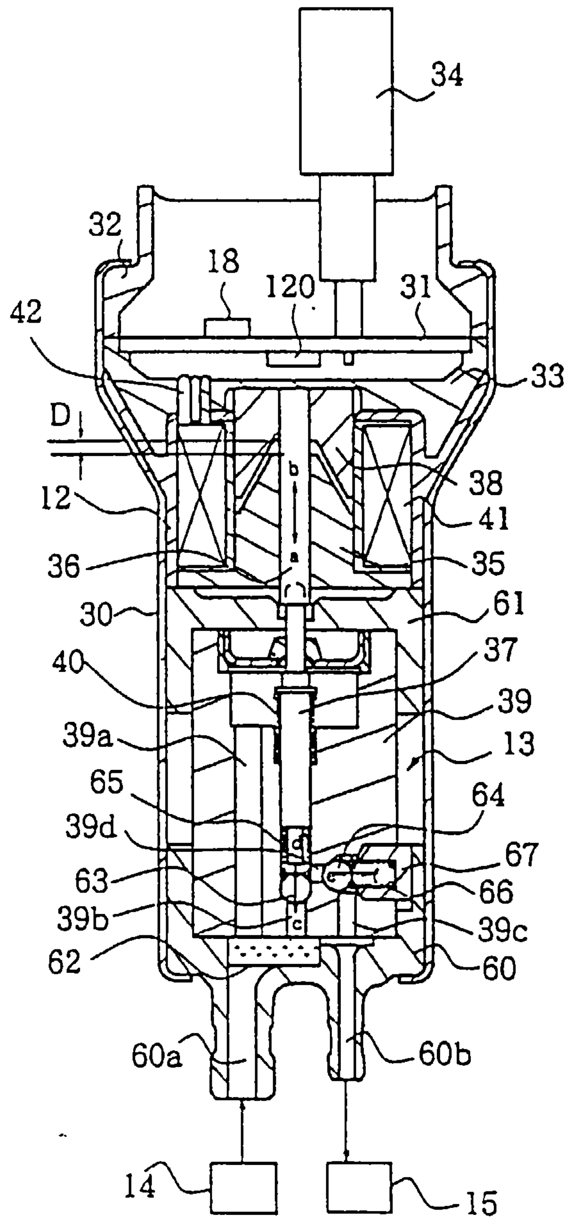
34
32
18
120
31
42
33
D
b
a
12
38
41
36
35
30
61
40
37
39
39a
13
65
64
39d
d
67
63
66
39b
c
39c
62
60
60a
60b
14
15

*FIG. 2*

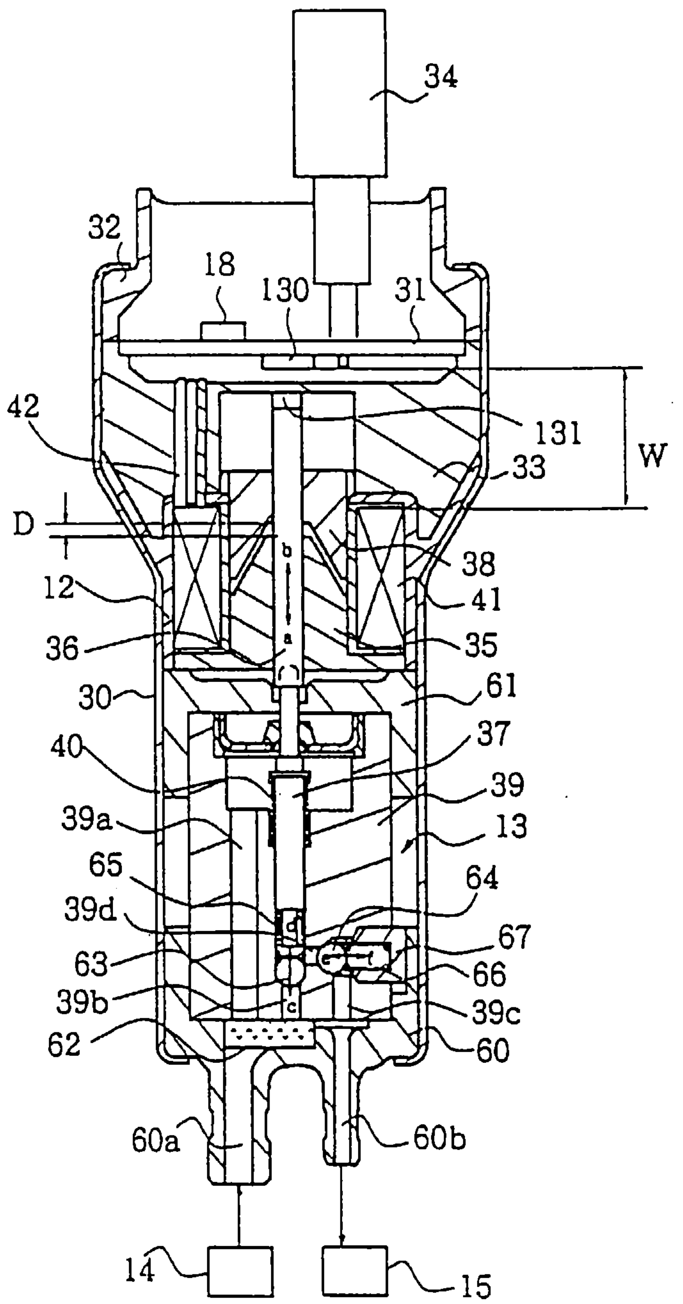
34
32
18
130
31
42
131
W
33
D
38
12
41
36
35
30
61
40
37
39
39a
13
65
64
39d
67
63
66
39b
39c
62
60
60a
60b
14
15

*FIG. 3*

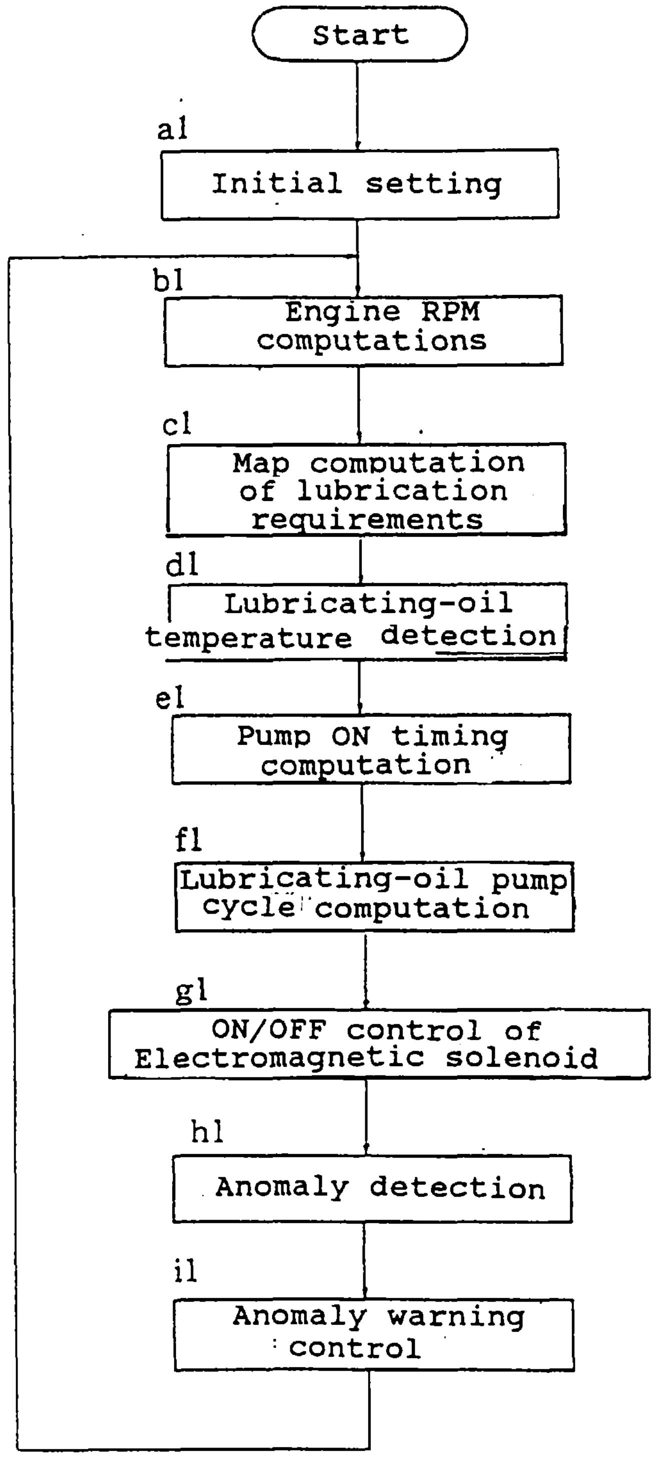
Start
a1
Initial setting
b1
Engine RPM computations
c1
Map computation of lubrication requirements
d1
Lubricating-oil temperature detection
e1
Pump ON timing computation
f1
Lubricating-oil pump cycle computation
g1
ON/OFF control of Electromagnetic solenoid
h1
Anomaly detection
i1
Anomaly warning control

*FIG. 4*

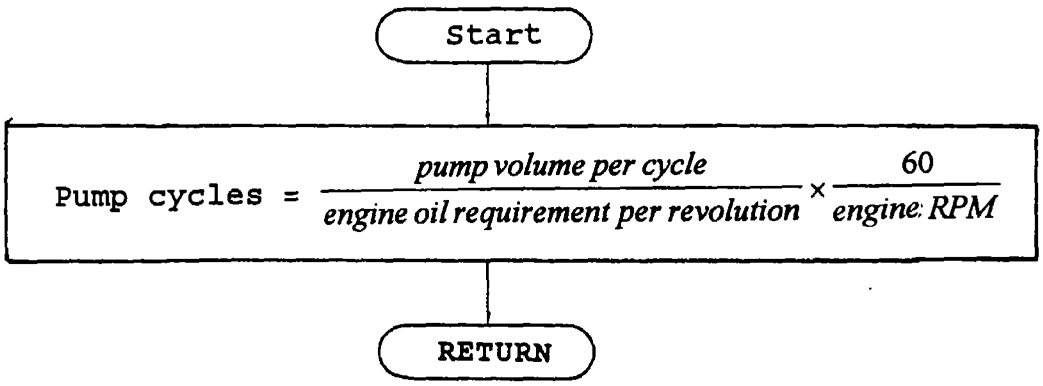
Start
Pump cycles = $\frac{\text{pump volume per cycle}}{\text{engine oil requirement per revolution}} \times \frac{60}{\text{engine RPM}}$
RETURN

*FIG. 5*

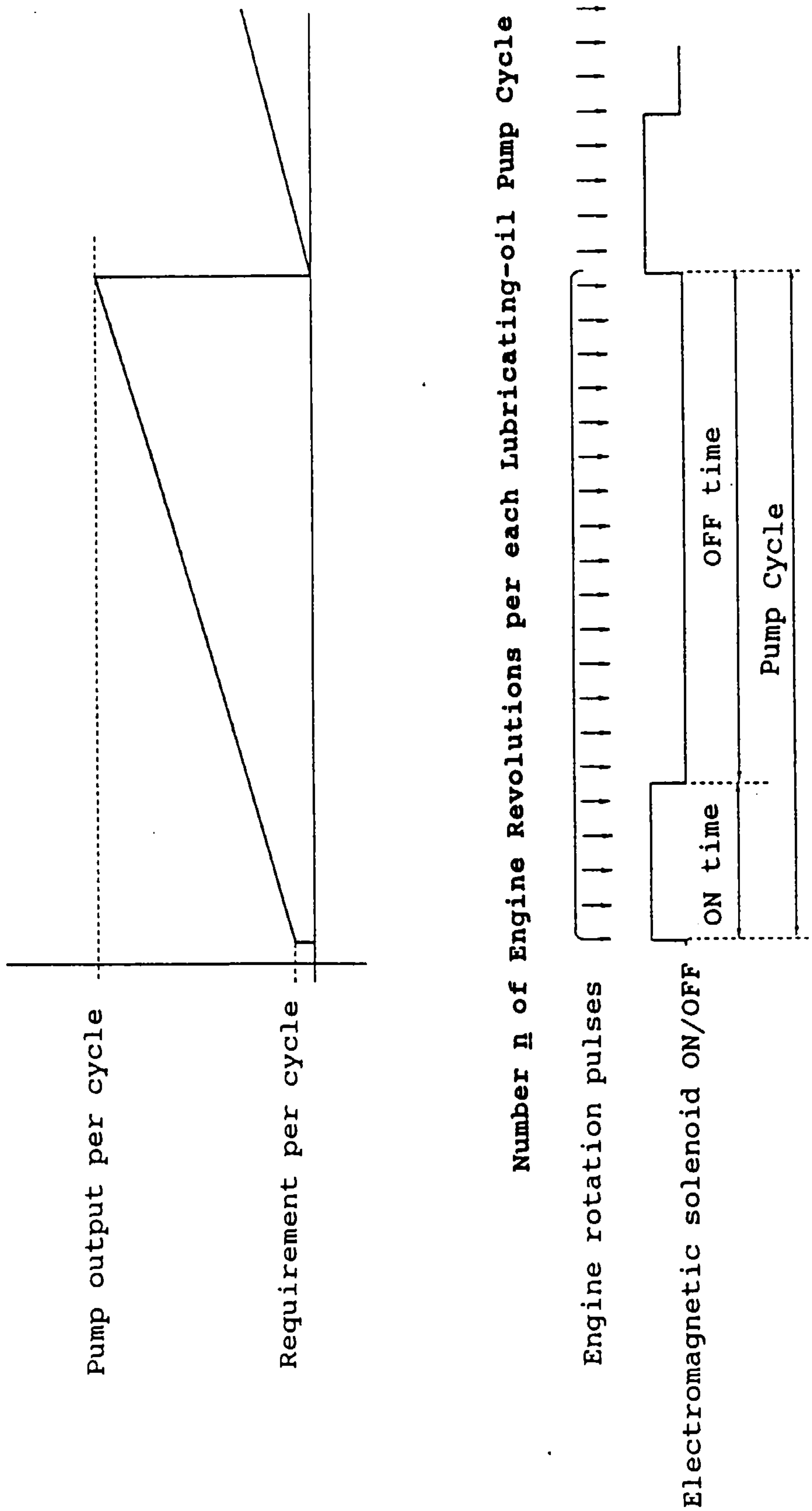

Pump output per cycle
Requirement per cycle
Number n of Engine Revolutions per each Lubricating-oil Pump Cycle
Engine rotation pulses
Electromagnetic solenoid ON/OFF
ON time
OFF time
Pump Cycle


*FIG. 6*

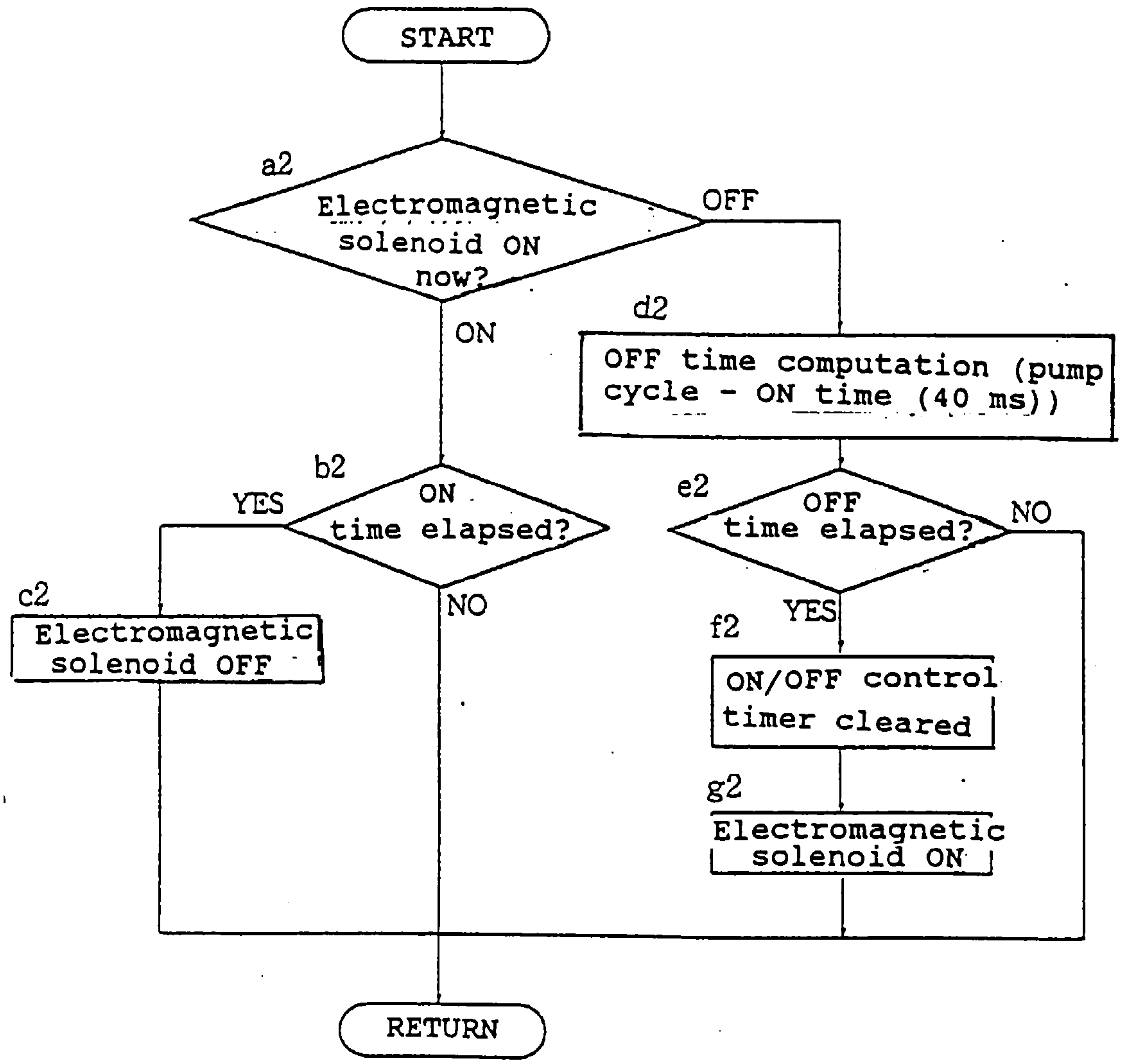
START
a2
Electromagnetic solenoid ON now?
OFF
ON
d2
OFF time computation (pump cycle - ON time (40 ms))
b2
ON time elapsed?
YES
NO
e2
OFF time elapsed?
NO
YES
c2
Electromagnetic solenoid OFF
f2
ON/OFF control timer cleared
g2
Electromagnetic solenoid ON
RETURN

*FIG. 7*

| | |
|---|---|
| (top) | START |
| a3 | CPU output ON now? |
| b3 | Determination interval flag set to 1, solenoid state cleared to 0 |
| c3 | Within determination interval? |
| d3 | Anomaly determination timer clear |
| (under d2) | RETURN |
| e3 | Determination interval elapsed? |
| f3 | Solenoid power ON? |
| g3 | Solenoid state set to 1 |
| h3 | Solenoid state: 2 |
| i3 | Solenoid state set to 2 |
| j3 | Determination interval flag cleared to 0 |
| k3 | Solenoid state: 2 |
| l3 | Anomaly flag cleared to 0 |
| m3 | Anomaly flag set to 1 |
| (bottom) | RETURN |

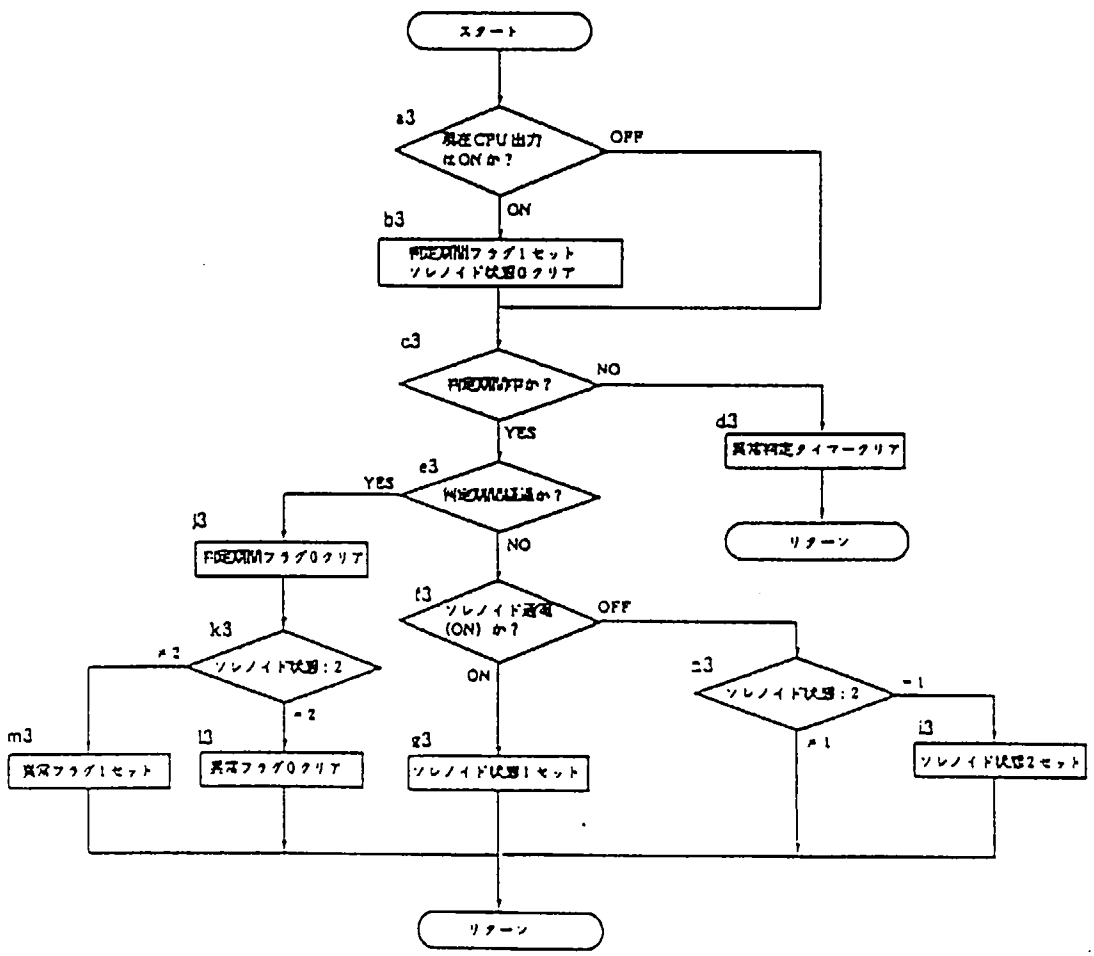


*FIG. 8*

| | |
|---|---|
| (top) | START |
| a4 | CPU output ON now? |
| b4 | Determination interval flag set to 1, plunger state cleared to 0 |
| c4 | Within determination interval? |
| d4 | Clear anomaly determination timer |
| (under d4) | RETURN |
| e4 | Determination interval elapsed? |
| f4 | Plunger power ON ? |
| g4 | Plunger state set to 1 |
| h4 | Plunger state: 2 |
| i4 | Plunger state set to 2 |
| j4 | Determination interval flag cleared to 0 |
| k4 | Plunger state: 2 |
| l4 | Anomaly flag cleared to 0 |
| m4 | Anomaly flag set to 1 |
| (bottom) | RETURN |

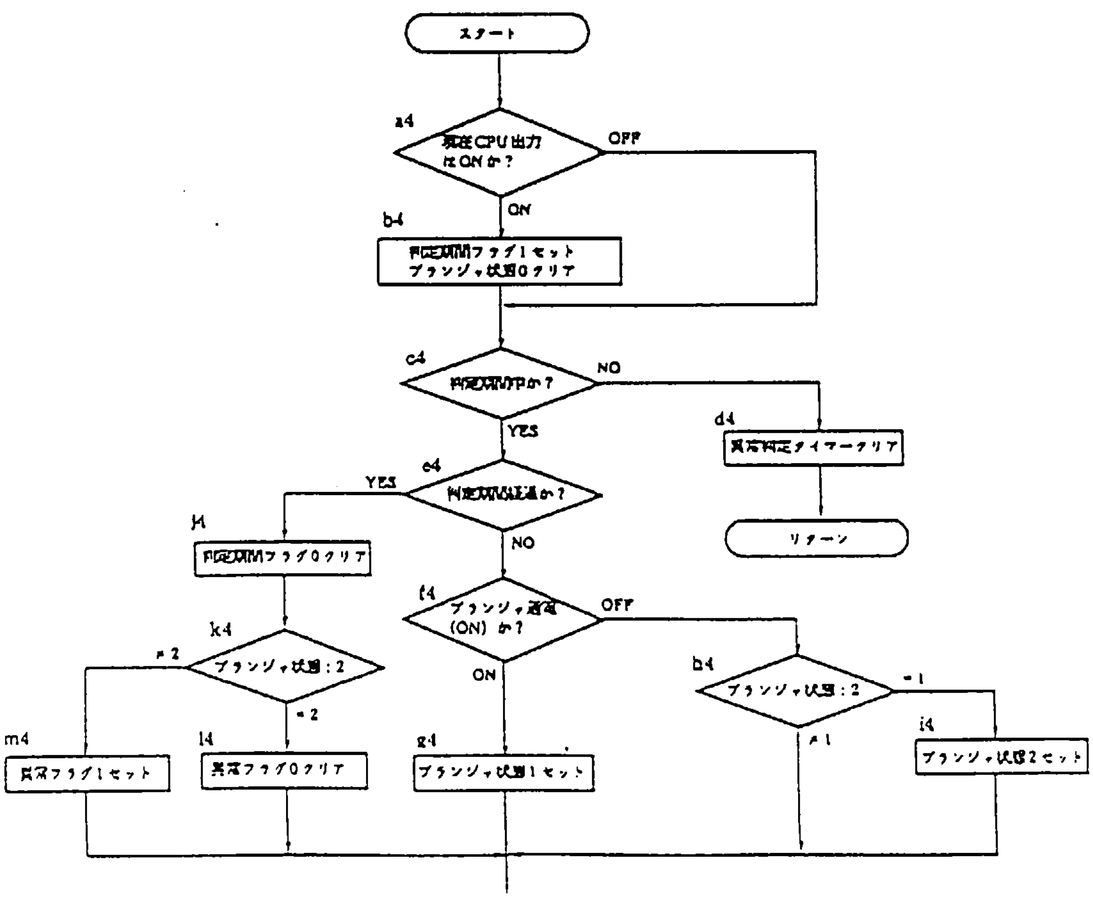


*FIG. 9*

*(left side, top to bottom)*
CPU output ON/OFF
Anomaly determination timer
Anomaly determination interval flag
Plunger position
(when normal)
Anomaly flag
Plunger position
(When abnormal: locked on OFF)
Determination flag
Anomaly flag
*(center, top to bottom)*
Normal (anomaly flag - 0)
Anomaly state
(anomaly flag = 1)
*(right side, bottom)*
Anomaly state
(anomaly flag = 1)

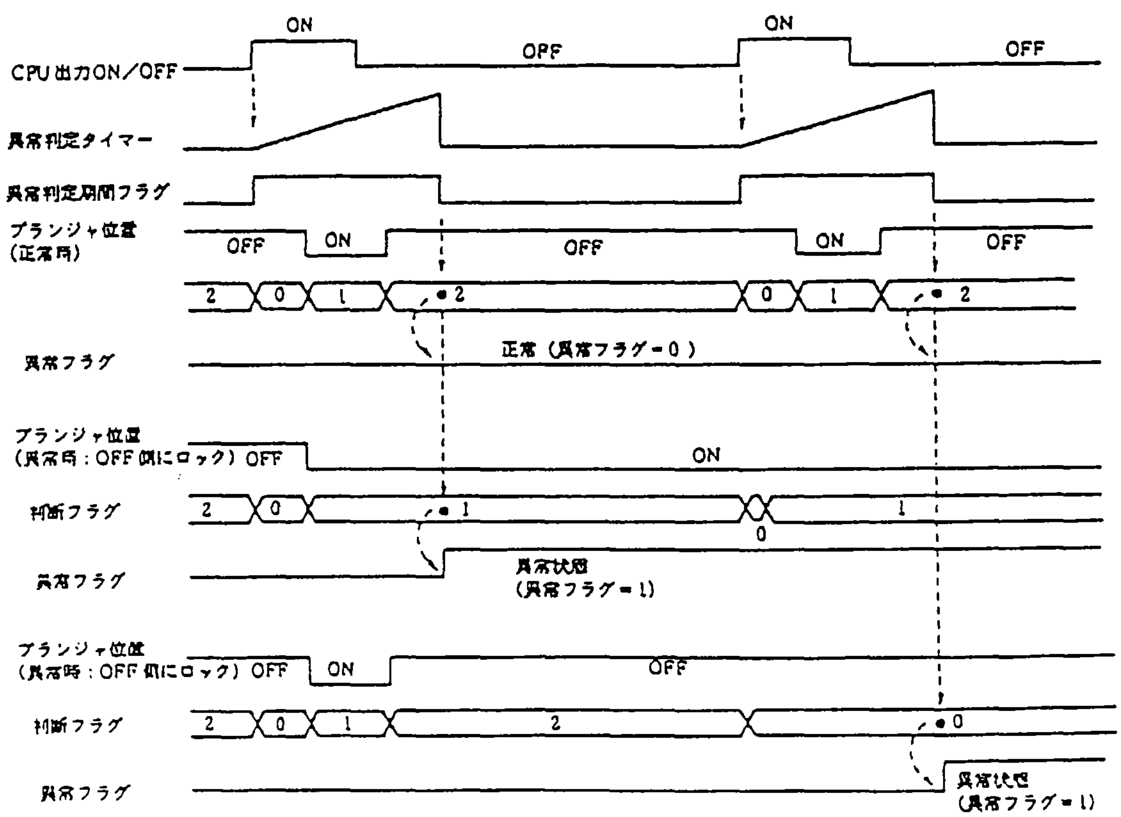


*FIG. 10*

| | |
|---|---|
| (top) | START |
| a5 | Abnormal operation?<br>(anomaly flag 1?) |
| b5 | Operation control of warning lamp |
| c5 | Output ignition cut off signal |
| (bottom) | RETURN |

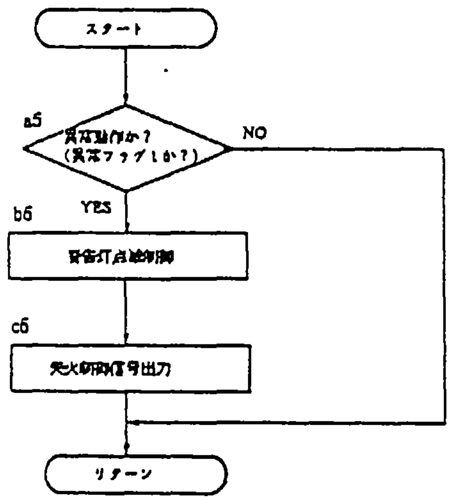


*FIG. 11*